(19) Europäisches Patentamt
European Patent Office
Office européen des brevets

(11) **EP 4 692 223 A1**

(12) **EUROPEAN PATENT APPLICATION**
published in accordance with Art. 153(4) EPC

(43) Date of publication:
**11.02.2026 Bulletin 2026/07**

(21) Application number: **24778752.6**

(22) Date of filing: **13.02.2024**

(51) International Patent Classification (IPC):
***C08L 27/12*** *(2006.01)* ***C08L 83/10*** *(2006.01)*
***C09K 3/10*** *(2006.01)*

(52) Cooperative Patent Classification (CPC):
**C08L 27/12; C08L 83/10; C09K 3/10**

(86) International application number:
**PCT/JP2024/004774**

(87) International publication number:
**WO 2024/202607 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.03.2023 JP 2023055950**

(71) Applicant: **VALQUA, Ltd.**
**Shinagawa-ku**
**Tokyo 141-6024 (JP)**

(72) Inventors:
- **NOGUCHI, Masamune**
**Gojo-shi, Nara 637-0014 (JP)**
- **IMADA, Hirohisa**
**Tokyo 141-6024 (JP)**

(74) Representative: **Dehns**
**10 Old Bailey**
**London EC4M 7NG (GB)**

(54) **ELASTOMER COMPOSITION, METHOD FOR PRODUCING ELASTOMER COMPOSITION, SEALING MATERIAL, AND METHOD FOR PRODUCING SEALING MATERIAL**

(57) An embodiment of the present invention relates to an elastomer composition, a method for producing an elastomer composition, a sealing material, or a method for producing a sealing material, the elastomer composition including a crosslinkable fluoroelastomer (A) and a compound (B) having a perfluoro skeleton, the compound having a viscosity of 1000 to 9000 Pa·s at 23°C, which is measured using a cone-plate viscometer in accordance with the method for measuring a viscosity of a liquid specified in JIS Z 8803:2011.

EP 4 692 223 A1

## Description

### Technical Field

An embodiment of the present invention relates to an elastomer composition, a method for producing an elastomer composition, a sealing material, or a method for producing a sealing material.

### Background Art

Conventionally, a sealing material has been widely used in various applications, and among these applications, a sealing material used in, for example, a semiconductor manufacturing apparatus is one of the examples of the application in which a sealing material is subjected to the greatest load.

For such a sealing material, a crosslinkable fluoroelastomer such as a fluoroelastomer (FKM) or a perfluoroelastomer (FFKM) is used because a sealing material excellent in plasma resistance (radical resistance) can be obtained.

For example, Patent Literature 1 discloses an uncrosslinked rubber composition used for the production of a sealing material, the uncrosslinked rubber composition including a hydrogen-containing fluororubber that is a crosslinkable fluoroelastomer and a liquid hydrogen site protecting agent.

### Citation List

### Patent Literature

Patent Literature 1: JP 2019-52226 A

### Summary of Invention

For the conventional uncrosslinked rubber composition such as the composition described in Patent Literature 1, a liquid or oily compound having a perfluoro skeleton (hydrogen site protecting agent in Patent Literature 1) has been used for the purpose of obtaining a sealing material excellent in plasma resistance (radical resistance).

In order to form a molded body such as a sealing material exhibiting desired physical properties from such an uncrosslinked rubber composition, each component in the composition needs to be uniformly mixed. However, it has been found that the crosslinkable fluoroelastomer is difficult to be mixed with the liquid or oily compound having a perfluoro skeleton, the amount of the liquid or oily compound having a perfluoro skeleton that can be used relative to the crosslinkable fluoroelastomer is limited, and it is not easy to form a uniform composition with the crosslinkable fluoroelastomer and the liquid or oily compound having a perfluoro skeleton.

An embodiment of the present invention provides an elastomer composition including a crosslinkable fluoroelastomer and a compound having a perfluoro skeleton, which is easily obtained as a uniform composition.

### Solution to Problem

An example of the configuration of the present invention is as follows.

[1] An elastomer composition including a crosslinkable fluoroelastomer (A) and
a compound (B) having a perfluoro skeleton, the compound having a viscosity of 1000 to 9000 Pa·s at 23°C, which is measured using a cone-plate viscometer in accordance with the method for measuring a viscosity of a liquid specified in JIS Z 8803:2011.

[2] The elastomer composition according to [1], in which the content of the compound (B) having a perfluoro skeleton is 5 parts by mass or more based on 100 parts by mass of the crosslinkable fluoroelastomer (A).

[3] The elastomer composition according to [1] or [2], in which the compound (B) having a perfluoro skeleton is a product of a reaction between a compound with a perfluoro skeleton having an ethylenically unsaturated bond and a reactive organosilicon compound having a hydrosilyl group.

[4] A method for producing an elastomer composition, the method including the following steps 1 and 2.

Step 1: A step of causing a reaction between a compound with a perfluoro skeleton having an ethylenically unsaturated bond and a reactive organosilicon compound having a hydrosilyl group to synthesize a compound (B) having a perfluoro skeleton, the compound having a viscosity of 1000 to 9000 Pa·s at 23°C, which is measured

using a cone-plate viscometer in accordance with the method for measuring a viscosity of a liquid specified in JIS Z 8803:2011

Step 2: A step of mixing a crosslinkable fluoroelastomer (A) with the compound (B) having a perfluoro skeleton obtained in the step 1

[5] The method for producing an elastomer composition according to [4], in which the amount of the compound (B) having a perfluoro skeleton used in the step 2 is 5 parts by mass or more based on 100 parts by mass of the crosslinkable fluoroelastomer (A).

[6] A sealing material obtained from the elastomer composition according to any one of [1] to [3].

[7] A method for producing a sealing material, the method including:

a step of crosslinking the elastomer composition according to any one of [1] to [3].

Advantageous Effects of Invention

According to an embodiment of the present invention, it is possible to obtain an elastomer composition including a crosslinkable fluoroelastomer and a compound having a perfluoro skeleton, which is easily obtained as a uniform composition in a short time.

In addition, according to an embodiment of the present invention, a uniform composition is easily obtained even when an elastomer composition has a high content ratio of the compound having a perfluoro skeleton (when an elastomer composition is obtained using the compound having a perfluoro skeleton in an amount with which a uniform composition cannot be obtained, in a case where a liquid or oily compound having a perfluoro skeleton is used), and thus it is possible to easily obtain an elastomer composition and a sealing material which are particularly excellent in plasma resistance (radical resistance).

While silica (inorganic filler) is required when a millable-type compound having a perfluoro skeleton is used, according to an embodiment of the present invention, a desired elastomer composition and a sealing material can be easily obtained without using silica which acts as a particle generating source, for example, in a plasma atmosphere.

Moreover, according to an embodiment of the present invention, it is possible to obtain a sealing material excellent in hardness, tensile strength, elongation at break, and tensile stress at 100% elongation (100% Mo) in a well-balanced manner, and it is possible to obtain a sealing material that can be suitably used for a semiconductor manufacturing apparatus and a plasma processing apparatus.

Brief Description of Drawings

Fig. 1 is an explanatory drawing regarding an adhesive force test in Examples described below.

Description of Embodiments

<<Elastomer composition>>

An elastomer composition according to an embodiment of the present invention (hereinafter, also referred to as the "present composition") includes a crosslinkable fluoroelastomer (A) and a compound (B) having a perfluoro skeleton, the compound having a viscosity of 1000 to 9000 Pa·s at 23°C, which is measured using a cone-plate viscometer in accordance with the method for measuring a viscosity of a liquid specified in JIS Z 8803:2011.

<Crosslinkable fluoroelastomer (A)>

The crosslinkable fluoroelastomer (A) is not particularly limited, and conventionally known crosslinkable fluoroelastomers can be used.

One kind or two or more kinds of the elastomer (A) may be used in the present composition.

In the present invention, "elastomer" is synonymous with "rubber", and these are not particularly distinguished from each other.

The elastomer (A) is also referred to as, for example, unvulcanized fluororubber, and examples of the crosslinking type thereof include a peroxide crosslinking type, a polyol crosslinking type, an amine crosslinking type, and a radiation crosslinking type. Among them, the elastomer is preferably a peroxide-crosslinkable fluoroelastomer from the viewpoint that, for example, it does not require the use of an acid acceptor that can be a particle generating source, for example, in a plasma atmosphere, and thus there is no risk of generating particles during the use of the obtained sealing material.

Specific examples of the elastomer (A) include a fluoroelastomer (FKM), a perfluoroelastomer (FFKM), a

tetrafluoroethylene-propylene-based elastomer (FEPM), and a fluorine thermoplastic elastomer (for example, an elastomer containing at least one elastomeric polymer chain segment and at least one non-elastomeric polymer chain segment, at least one of which is a fluorine-containing polymer chain segment).

As the elastomer (A), one synthesized by a conventionally known method may be used, or a commercially available product may be used. Examples of the commercially available product include "DAI-EL" manufactured by DAIKIN INDUSTRIES, LTD., "Viton" manufactured by The Chemours Company, "Dyneon" manufactured by 3M Company, and "Tecnoflon" manufactured by Solvay SA.

As the elastomer (A), an elastomer capable of providing a sealing material exhibiting resistance to plasma (plasma etching treatment) used in various semiconductor dry processes is preferable, and FKM is more preferable because of relatively good plasma resistance and excellent sealability. In addition, FKM is also preferable from the viewpoints of, for example, being inexpensive and versatile.

The FKM is not particularly limited, but examples thereof include polymers containing a hydrogen atom (carbon-hydrogen bond) in the polymer main chain, and specifically, it is preferable to contain a structural unit derived from vinylidene fluoride.

Although the FKM is not particularly limited, specific examples thereof include a vinylidene fluoride-hexafluoropropylene-based polymer; a vinylidene fluoride-hexafluoropropylene-tetrafluoroethylene-based polymer; a tetrafluoroethylene-propylene-based polymer; a vinylidene fluoride-propylene-tetrafluoroethylene-based polymer; an ethylene-tetrafluoroethylene-perfluoro(alkyl vinyl ether)-based polymer; a vinylidene fluoride-tetrafluoroethylene-perfluoro(alkyl vinyl ether)-based polymer; and a vinylidene fluoride-perfluoro(alkyl vinyl ether)-based polymer.

Preferred examples of the perfluoro(alkyl vinyl ether) include perfluoro(methyl vinyl ether).

Among them, a ternary polymer is preferable, and a vinylidene fluoride-hexafluoropropylene-tetrafluoroethylene-based polymer is more preferable from the viewpoint of, for example, being excellent in, for example, plasma resistance, heat resistance, and chemical resistance.

The peroxide-crosslinkable fluoroelastomer preferably has a functional group such as an iodine group, a bromine group, a cyano group, a peroxy group, or an unsaturated group, and more preferably has an iodine group or a bromine group from the viewpoint of ease of introduction of the functional group.

The fluoroelastomer having an iodine group and/or a bromine group can be obtained, for example, by using one or more kinds of saturated or unsaturated iodine-containing and/or bromine-containing compounds at the time of synthesizing the elastomer.

Examples of the iodine-containing and/or bromine-containing compound include compounds represented by the following formula (I) or (II).

By using the compound represented by the following formula (I), a fluoroelastomer having an iodine group and/or a bromine group in a side chain can be synthesized, and by using the compound represented by the following formula (II), a fluoroelastomer having an iodine group and/or a bromine group at a terminal can be synthesized.

$$CY^1_2=CY^2RfX \qquad (I)$$

[$Y^1$ and $Y^2$ are each independently a fluorine atom, a hydrogen atom, or a methyl group, Rf is a linear or branched fluorine-containing alkylene group in which some or all of the hydrogen atoms are substituted with fluorine atoms, or a group containing an ether bond in a part of the fluorine-containing alkylene group, and X is an iodine atom or a bromine atom.]

Specific examples of the compound represented by the formula (I) include the compounds described in WO 2009/119409 A.

$$I_nBr_mR \qquad (II)$$

[R is a fluorohydrocarbon group having 1 to 12 carbon atoms, n and m are each independently an integer of 0 to 2, and n + m is 1 or 2.]

Specific examples of the compound represented by the formula (II) include the compounds described in JP 2002-97329 A and JP 2008-56739 A.

The fluorine content of the elastomer (A) is not particularly limited, but is preferably 55% by mass or more, more preferably 60% by mass or more, still more preferably 63% by mass or more, particularly preferably 65% by mass or more, and more preferably 73% by mass or less and still more preferably 71% by mass or less from the viewpoint that, for example, a desired sealing material can be easily obtained.

The fluorine content can be measured and calculated by, for example, elemental analysis of fluorine using, for example, $^{19}F$-NMR or $^{1}H$-NMR or mass spectrometry (MS spectrum method).

The fluorine content in the present invention is a value rounded off to the nearest whole number.

The elastomer (A) preferably contains a crosslinkable fluoroelastomer (A1) having a fluorine content of 69% by mass or more and a crosslinkable fluoroelastomer (A2) having a fluorine content of 55 to 68% by mass.

By using at least two kinds of crosslinkable fluoroelastomers having fluorine contents in the above ranges, a uniform elastomer composition can be easily obtained in a short time, an elastomer composition excellent in moldability can be easily obtained, and a sealing material excellent in hardness, tensile strength, elongation at break, and 100% Mo in a well-balanced manner can be easily obtained.

The fluorine content of the elastomer (A1) is preferably 70% by mass or more and preferably 73% by mass or less and more preferably 71% by mass or less.

The fluorine content of the elastomer (A2) is preferably 60 to 68% by mass, more preferably 63 to 68% by mass, and still more preferably 65 to 68% by mass.

The Mooney viscosity of the elastomer (A) is preferably 10 or more, more preferably 15 or more, still more preferably 18 or more, and preferably 140 or less, more preferably 120 or less, still more preferably 80 or less, particularly preferably 60 or less.

When the Mooney viscosity of the elastomer (A) is in the above range, an elastomer composition excellent in moldability, particularly, sheeting property can be easily obtained.

In the present specification, the Mooney viscosity refers to a Mooney viscosity (ML 1 + 10) at 121°C measured in accordance with ASTM D 1646.

The content of the elastomer (A) in the solid content of the present composition is preferably 40% by mass or more, more preferably 50% by mass or more, and preferably 95% by mass or less, more preferably 93% by mass or less.

When the content of the elastomer (A) is in the above range, it is possible to easily obtain a sealing material which is excellent in plasma resistance and chemical resistance such as resistance to chemicals and is excellent in hardness, tensile strength, elongation at break, and 100% Mo in a well-balanced manner.

In the present specification, the solid content refers to a component other than a solvent.

When the present composition contains the elastomer (A1), the content of the elastomer (A1) in the solid content of the present composition is preferably 40% by mass or more, more preferably 50% by mass or more, and preferably 95% by mass or less, more preferably 85% by mass or less.

When the content of the elastomer (A1) is in the above range, a sealing material excellent in plasma resistance and chemical resistance such as resistance to chemicals can be easily obtained.

When the present composition contains the elastomer (A2), the content of the elastomer (A2) in the solid content of the present composition is preferably 2% by mass or more, more preferably 5% by mass or more, and preferably 50% by mass or less, more preferably 40% by mass or less.

When the content of the elastomer (A2) is in the above range, a sealing material excellent in moldability and chemical resistance in a well-balanced manner can be easily obtained.

When the present composition contains the elastomers (A1) and (A2), the content of the elastomer (A1) is preferably 60% by mass or more, more preferably 65% by mass or more, and preferably 95% by mass or less based on the total content of the elastomers (A1) and (A2) in the present composition.

When the mass ratio of the contents of the elastomers (A1) and (A2) is in the above range, a uniform elastomer composition can be easily obtained in a short time, an elastomer composition excellent in moldability can be easily obtained, and a sealing material excellent in hardness, tensile strength, elongation at break, and 100% Mo in a well-balanced manner can be easily obtained.

<Compound (B) having perfluoro skeleton>

The compound (B) having a perfluoro skeleton is not particularly limited, as long as the compound has a perfluoro skeleton and has a viscosity of 1000 to 9000 Pa·s at 23°C, which is measured using a cone-plate viscometer in accordance with the method for measuring a viscosity of a liquid specified in JIS Z 8803:2011.

By using the compound (B), a sealing material excellent in plasma resistance (radical resistance) can be easily obtained. In addition, by using the compound (B), a sealing material excellent in hardness, tensile strength, elongation at break, and 100% Mo in a well-balanced manner can be easily obtained.

One kind or two or more kinds of the compound (B) may be used in the present composition.

The description that the present composition includes the compound (B) indicates that the compound (B) is used as a raw material for preparing the present composition. The case where the present composition includes two or more kinds of compounds (B) refers to using two or more kinds of compounds (B) as raw materials for preparing the present composition.

The viscosity of the compound (B) at 23°C is 1000 to 9000 Pa·s, preferably 3000 to 8000 Pa·s, the viscosity being measured using a cone-plate viscometer in accordance with the method for measuring a viscosity of a liquid specified in JIS Z 8803:2011.

The compound (B) having a viscosity in the above range is a gel-type or slime-type compound different from liquid, oily, and millable-type compounds.

As for the viscosity of the compound (B), the viscosity of the compound before being mixed with, for example, the

elastomer (A) or another component described below, that is, the viscosity of the compound as a raw material for preparing the present composition is in the above range.

The minimum torque (ML) of the compound (B) at 60°C measured with a curelastometer is preferably less than 0.5 kgf·cm.

The minimum torque (ML) also refers to the minimum torque (ML) of the raw material before being mixed with, for example, the elastomer (A) or another component described below.

Specifically, the minimum torque (ML) is a value measured under the following conditions using a CURELASTOMETER TYPE R (for rubber) manufactured by JSR Trading Co., Ltd.

Sample: 10 g
Temperature: 60°C
Amplitude angle: ±3°
Measurement time: 10 minutes

The content of the compound (B) in the present composition is preferably 0.5 parts by mass or more, more preferably 1 part by mass or more, and preferably 100 parts by mass or less, more preferably 50 parts by mass or less based on 100 parts by mass of the elastomer (A) from the viewpoints that, for example, an elastomer composition excellent in roll processability can be easily obtained, and a sealing material excellent in plasma resistance (radical resistance) can be easily obtained.

The content of the compound (B) in the present composition is preferably 5 parts by mass or more, more preferably 10 parts by mass or more, and preferably 100 parts by mass or less based on 100 parts by mass of the elastomer (A), from the viewpoint that according to an embodiment of the present invention, a uniform composition is obtained even when an elastomer composition is obtained using the compound having a perfluoro skeleton in an amount with which a uniform composition cannot be obtained, in a case where a liquid or oily compound having a perfluoro skeleton is used, and thus it is possible to easily obtain, for example, a sealing material which are particularly more excellent in plasma resistance (radical resistance).

When the present composition includes the compound (B) and a crosslinking agent (C) described below, the mass ratio of the content of the compound (B) to the content of the crosslinking agent (C) in the present composition (the content of the compound (B)/the content of the crosslinking agent (C)) is preferably 0.5 or more, more preferably 1 or more, and preferably 80 or less, more preferably 60 or less, from the viewpoint that, for example, a sealing material having more excellent plasma resistance can be easily obtained.

The compound (B) can be obtained by causing a reaction between a compound (b1) with a perfluoro skeleton having an ethylenically unsaturated bond and a reactive organosilicon compound (b2) having a hydrosilyl group.

When a composition including the elastomer (A), the compound (b1), and the compound (b2) is used, and, for example, when a sealing material (molded body) is formed as described below, the composition including the elastomer (A) and the compound (B) is not obtained since the elastomer (A) reacts with the compound (b1) and/or the compound (b2).

The viscosity at 23°C of each of the compound (b1) and the compound (b2) is preferably 1 to 30 Pa·s and more preferably 2 to 10 Pa·s, the viscosity being measured using a cone-plate viscometer in accordance with the method for measuring a viscosity of a liquid specified in JIS Z 8803:2011.

As the compound (b1) and the compound (b2), commercially available products such as "SIFEL" (manufactured by Shin-Etsu Chemical Co., Ltd.) may be used.

Examples of the commercially available product for the compound (B) include commercially available products of one-component type and commercially available products of two-component type, and any of these may be used.

The amount of the compound (b1) used in the reaction is preferably 1 to 80% by mass and more preferably 40 to 60% by mass based on a total of 100% by mass of the compound (b1) and the compound (b2).

Although the reaction conditions are not particularly limited as long as it is possible to synthesize the compound (B) with a perfluoro skeleton having the viscosity in the above range, the reaction temperature is preferably 100 to 250°C and more preferably 120 to 220°C, and the reaction time is preferably 20 minutes to 3 hours and more preferably 30 minutes to 2 hours.

When a compound having a viscosity in the above range is used as the compound (b1) and the compound (b2) which are raw materials for the reaction, a part of the reaction product obtained by causing the reaction under the above reaction conditions is extracted, and the viscosity is measured. When the viscosity is in the range of 1000 to 9000 Pa·s, the reaction is stopped, and when the viscosity is less than 1000 Pa·s, the reaction is further continued by changing the reaction temperature as necessary, whereby the compound (B) having a viscosity in the range of 1000 to 9000 Pa·s can be obtained.

In the reaction, for example, an additive such as a catalyst (for example, the catalysts described in, for example, JP 2003-183402 A and JP H11-116684 A) may be used.

<Compound (b1)>

The compound (b1) is a compound with a perfluoro skeleton having an ethylenically unsaturated bond, specifically, a compound with a perfluoro skeleton having an ethylenically unsaturated bond-containing group, and is a compound other than the elastomer (A).
One kind of the compound (b1) may be used, or two or more kinds thereof may be used.
Examples of the ethylenically unsaturated bond-containing group include alkenyl groups having 2 to 8 carbon atoms such as a vinyl group, a methylvinyl group, an allyl group, a propenyl group, an isopropenyl group, a butenyl group, a pentenyl group, a hexenyl group, and a heptenyl group, a vinylphenyl group, a (meth)acryloyl group, an allyloxy group, a styryl group, and a propargyl group. Among them, an alkenyl group is preferable, an alkenyl group having 2 to 4 carbon atoms is more preferable, and a vinyl group is particularly preferable.
The compound (b) may have two or more kinds of ethylenically unsaturated bonds.
Examples of the compound (b1) include compounds having a perfluoropolyether structure having an ethylenically unsaturated bond and compounds having a perfluoroalkylene structure having an ethylenically unsaturated bond, and among these compounds, compounds having a perfluoropolyether structure having an ethylenically unsaturated bond (hereinafter, also referred to as "compounds (b1-1)") are preferable.

·Compound (b1-1)

The compound (b1-1) is preferably a perfluoropolyether having two or more ethylenically unsaturated bonds in one molecule.
Preferred examples of the compound (b1-1) include the compounds described in JP 2003-183402 A, JP 11-116684 A, JP 11-116685 A, and JP 2015-67737 A.
Examples of the compound (b1-1) include compounds represented by the following formula (1).

$$Z^1\text{-}(X)_p\text{-}(Rf\text{-}Q)_a\text{-}Rf\text{-}(X)_p\text{-}Z^2 \cdots \qquad (1)$$

X is independently $-CH_2-$, $-CH_2O-$, $-CH_2OCH_2-$, $*-Si(R^2)_2-Ph-$ (Ph: phenylene group), $*-Y-NR^1-SO_2-$, or $*-Y-NR^1-CO-$ (where Y is $-CH_2-$ or $*-Si(R^2)_2-Ph-$, and the * moiety is bonded to $Z^1$ or $Z^2$).
Rf is independently a divalent perfluoropolyether group (divalent perfluorooxyalkylene group).
p is independently 0 or 1.
a is an integer of 0 or more, preferably an integer of 0 to 10, and more preferably an integer of 0 to 6.
Q is independently a group represented by the following formula (2), (3), or (4).
$R^2$ is a substituted or unsubstituted monovalent hydrocarbon group having 1 to 10 carbon atoms, particularly 1 to 8 carbon atoms, and examples thereof include alkyl groups such as a methyl group, an ethyl group, a propyl group, an isopropyl group, a butyl group, an isobutyl group, a t-butyl group, a pentyl group, a hexyl group, an octyl group, and a decyl group; cycloalkyl groups such as a cyclopentyl group, a cyclohexyl group, and a cycloheptyl group; alkenyl groups such as a vinyl group, an allyl group, a propenyl group, an isopropenyl group, a butenyl group, and a hexenyl group; aryl groups such as a phenyl group, a tolyl group, a xylyl group, and a naphthyl group; aralkyl groups such as a benzyl group, a phenylethyl group, and a phenylpropyl group; and substituted forms of these groups in which some or all of the hydrogen atoms are substituted with, for example, a halogen atom (for example, a chloromethyl group, chloropropyl group, a bromoethyl group, and fluorine-substituted alkyl groups such as a 3,3,3-trifluoropropyl group and a 3,3,4,4,5,5,6,6,6-nonafluorohexyl group).
$R^1$ is a hydrogen atom or a substituted or unsubstituted monovalent hydrocarbon group having 1 to 10 carbon atoms, particularly 1 to 8 carbon atoms which is the same as the group exemplified for $R^2$, and examples of $R^1$ include a hydrogen atom and the groups which are the same as $R^2$, and specifically include alkyl groups such as a methyl group, an ethyl group, a propyl group, and an isopropyl group; cycloalkyl groups such as a cyclohexyl group; alkenyl groups such as a vinyl group and an allyl group, aryl groups such as a phenyl group and a tolyl group; and substituted forms of these groups in which some of the hydrogen atoms are substituted with, for example, a halogen atom (for example, a chloromethyl group, a chloropropyl group, and fluorine-substituted alkyl groups such as a 3,3,3-trifluoropropyl group and a 3,3,4,4,5,5,6,6,6-nonafluorohexyl group).
$Z^1$ and $Z^2$ are each independently an ethylenically unsaturated bond-containing group, and may be - Si(ethylenically unsaturated bond-containing group) $(R')_2$.
The ethylenically unsaturated bond-containing group is preferably a monovalent alkenyl group, more preferably a monovalent alkenyl group having 2 to 4 carbon atoms, and particularly preferably a monovalent vinyl group.
R' is independently a substituted or unsubstituted monovalent hydrocarbon group, and specific examples thereof include alkyl groups such as a methyl group, an ethyl group, a n-propyl group, an i-propyl group, a n-butyl group, an i-butyl group, a t-butyl group, a pentyl group, and a hexyl group; aryl groups such as a phenyl group, a tolyl group, and a xylyl

group; and halogenated alkyl groups such as a 3-chloropropyl group and a 3,3,3-trifluoropropyl group. Among these, an alkyl group having 1 to 5 carbon atoms is preferable.

[Chemical Formula 1]

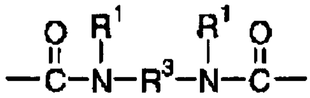
—(2)

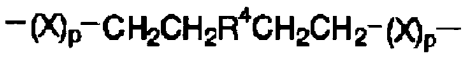
· —(3)

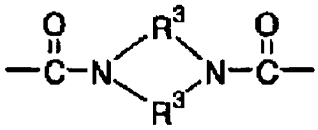
—(4)

In the formulae (2) to (4), X, p, and $R^1$ are as defined for X, p, and $R^1$ in the formula (1). $R^3$ and $R^4$ are each independently a substituted or unsubstituted divalent hydrocarbon group which may contain one or more atoms selected from an oxygen atom, a nitrogen atom, a silicon atom, and a sulfur atom in the bond, and $R^3$ in the formula (2) and $R^4$ in the formula (3) may each independently be a group represented by the following formula (5) or (6).

[Chemical Formula 2]

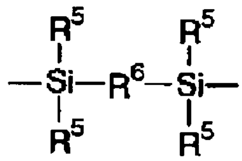
—(5)

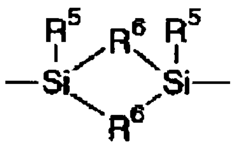
—(6)

In the formulae (5) and (6), $R^5$ is a substituted or unsubstituted monovalent hydrocarbon group, and $R^6$ is a group containing one or more atoms selected from a carbon atom, an oxygen atom, a nitrogen atom, a silicon atom, and a sulfur atom.

$R^3$ and $R^4$ are not particularly limited as long as they are substituted or unsubstituted divalent hydrocarbon groups, but divalent hydrocarbon groups having 1 to 20 carbon atoms, particularly 2 to 12 carbon atoms are suitable, and specific examples thereof include alkylene groups such as a methylene group, an ethylene group, a propylene group, a methylethylene group, a butylene group, and a hexamethylene group; cycloalkylene groups such as a cyclohexylene group; arylene groups such as a phenylene group, a tolylene group, a xylylene group, a naphthylene group, and a biphenylene group; substituted forms of these groups in which some of the hydrogen atoms are substituted with, for example, a halogen atom; and combinations of these substituted or unsubstituted alkylene groups and/or arylene groups.

Preferably, $-(X)_p-(Rf-Q)_a-Rf-(X)_p-$ is $-(O-R^7)_n-$[$R^7$ represents a perfluoroalkanediyl group, n represents an integer of 2 or more, and plural $R^7$ groups may be the same as or different from each other].

Examples of the perfluoroalkanediyl group represented by $R^7$ include groups represented by $C_mF_{2m}$ (wherein m is an integer of 2 or more), and the perfluoroalkanediyl group may be linear or branched. The number of carbon atoms of the perfluoroalkanediyl group (that is, m) is, for example, 1 to 10, preferably 2 to 6, more preferably 2 to 4, and particularly preferably 2 to 3.

n may be 2 or more, and is, for example, 10 or more, preferably 40 or more, and more preferably 70 or more. Also, n is, for example, 300 or less, preferably 200 or less, and more preferably 150 or less.

The group $-(O-R^7)_n-$ may also be the same group as Rf described below.

The compound represented by the formula (1) is preferably a compound represented by the following formula

(1-1).

$$CH_2=CH-(X)_p-(Rf-Q)_a-Rf-(X)_p-CH=CH_2 \cdots \quad (1\text{-}1)$$

[The definition of each symbol in the formula (1-1) is the same as the definition of each symbol in the formula (1).]

The compound represented by the formula (1-1) is preferably a compound in which a is 0, and in this case, the compound is represented by the following formula (1-1-1).

$$CH_2=CH-(X)_p-Rf-(X)_p-CH=CH_2 \cdots \quad (1\text{-}1\text{-}1)$$

[The definition of each symbol in the formula (1-1-1) is the same as the definition of each symbol in the formula (1).]

Specific examples of Rf include the following groups.

$$-[CF(Z)OCF_2]_p-(CF_2)_r-[CF_2OCF(Z)]_q-$$

(Z is a fluorine atom or $-CF_3$, and p, q, and r are integers satisfying $p \geq 1$, $q \geq 1$, and $2 \leq p + q \leq 200$, preferably $2 \leq p + q \leq 110$, and $0 \leq r \leq 6$),

$$-CF_2CF_2OCF_2-(CF(CF_3)OCF_2)_s-(CF_2)_r-(CF_2OCF(CF_3))_t-CF_2OCF_2CF_2-$$

(r, s, and t are integers satisfying $0 \leq r \leq 6$, $s \geq 0$, $t \geq 0$, and $0 \leq s + t \leq 200$, and preferably $2 \leq s + t \leq 110$),

$$-CF(Z)-(OCF(Z)CF_2)_u-(OCF_2)_v-OCF(Z)-$$

(Z is a fluorine atom or $-CF_3$, and u and v are integers satisfying $1 \leq u \leq 100$ and $1 \leq v \leq 50$),

$$-CF_2CF_2-[OCF_2CF_2CF_2]_w-OCF_2CF_2-$$

(w is an integer satisfying $1 \leq w \leq 100$)

<Compound (b2)>

The compound (b2) is a reactive organosilicon compound having a hydrosilyl group, and is a compound other than the elastomer (A). The compound (b2) is preferably a compound having two or more, preferably three or more hydrosilyl groups (Si-H) in one molecule and capable of undergoing an addition reaction with at least the ethylenically unsaturated bond in the compound (b1).

One kind of the compound (b2) may be used, or two or more kinds thereof may be used.

Preferred examples of the compound (b2) include the organosilicon compounds described in, for example, JP 2003-183402 A and JP H11-116684 A.

Examples of the compound (b2) include an organohydrogen polysiloxane having two, preferably three or more hydrosilyl groups.

As the organohydrogen polysiloxane, an organohydrogen polysiloxane generally used in an addition reaction-curable silicone rubber composition can be used, and a compound represented by the following formula (7) or (8) is particularly preferable.

$$Z-CH_2CH_2-(X)_P-Rf-(X)_P-CH_2CH_2-Z \cdots \quad (7)$$

$$Rf-(X)_P-CH_2CH_2-Z \cdots \quad (8)$$

[In the formulae (7) and (8), X, p, and Rf are as defined for X, p, and Rf in the formula (1), and Z is a group represented by the following formula (9) or (10).]

[Chemical Formula 3]

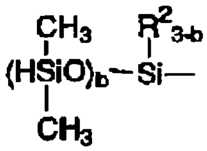

—(9)

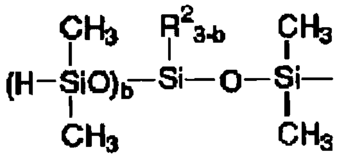

—(10)

In the formulas (9) and (10), $R^2$ is a substituted or unsubstituted monovalent hydrocarbon group, b is an integer of 1 to 3 in the compound represented by the formula (7), and is an integer of 2 to 3 in the compound represented by the formula (8).

The substituted or unsubstituted monovalent hydrocarbon group in $R^2$ is preferably a group having 1 to 8 carbon atoms, and specific examples thereof include alkyl groups such as a methyl group, an ethyl group, a propyl group, an isopropyl group, a butyl group, an isobutyl group, a t-butyl group, a pentyl group, a neopentyl group, a hexyl group, a heptyl group, and an octyl group; cycloalkyl groups such as a cyclopentyl group, a cyclohexyl group, and a cycloheptyl group; aryl groups such as a phenyl group, a tolyl group, and a xylyl group; aralkyl groups such as a benzyl group and a phenylethyl group; and substituted forms of these groups in which some or all of the hydrogen atoms are substituted with, for example, a halogen atom such as fluorine, chlorine, and bromine (for example, a chloromethyl group, a chloropropyl group, a bromoethyl group, a 3,3,3-trifluoropropyl group, and a 3,3,4,4,5,5,6,6,6-nonafluorohexyl group).

<Other components>

In addition to the elastomer (A) and the compound (B), other conventionally known components that have been blended in the sealing material may be blended in the present composition as necessary, as long as the effects of the present invention are not impaired. Examples of these other components include a crosslinking agent (C); a crosslinking co-agent (D); polyol compounds; organic pigments such as anthraquinone pigments, perylene pigments, and dioxazine pigments; plasticizers; processing aids; vulcanization accelerators; antiaging agents; antioxidants; inorganic fillers; and organic fillers.

One kind of each of other components described above may be used, or two or more kinds thereof may be used.

<Crosslinking agent (C)>

The elastomer (A) can be crosslinked without using the crosslinking agent (C), but the present composition preferably includes the crosslinking agent (C) according to the kind of elastomer (A) to be used from the viewpoints of, for example, sufficient crosslinking and being capable of easily obtaining a sealing material excellent in hardness, tensile strength, elongation at break, and 100% Mo in a well-balanced manner.

When the crosslinking agent (C) is used, one kind or two or more kinds of the crosslinking agent (C) may be used in the present composition.

As the crosslinking agent (C), a conventionally known crosslinking agent can be used without particular limitation, and may be appropriately selected according to the kind of elastomer (A) to be used. Examples of the crosslinking agent in the case of using FKM include peroxide crosslinking agents, polyamine crosslinking agents, polyol crosslinking agents, and triazine crosslinking agents.

Among them, a peroxide crosslinking agent is preferable from the viewpoint that, for example, it is not necessary to blend an acid acceptor such as magnesium oxide or calcium hydroxide, which becomes a particle generating source, for example, in a plasma atmosphere, in the present composition, and thus there is no risk of generating particles during use of the obtained sealing material.

Examples of the peroxide crosslinking agent include 2,5-dimethyl-2,5-di(t-butylperoxy)hexane, dicumyl peroxide, 2,4-dichlorobenzoyl peroxide, di-t-butyl peroxide, t-butyldicumyl peroxide, benzoyl peroxide, 2,5-dimethyl-2,5-(t-butylperoxy)hexyne-3, 2,5-dimethyl-2,5-di(benzoylperoxy)hexane, $\alpha,\alpha'$-bis(t-butylperoxy-m-isopropyl)benzene, t-butylperoxy isopropyl carbonate, di-(4-t-butylcyclohexyl) peroxydicarbonate, p-chlorobenzoyl peroxide, t-butylperoxy-2-ethylhexanoate, t-butyl peroxybenzoate, 1,1-bis(t-butylperoxy)-3,5,5-trimethylcyclohexane, 2,5-dimethylhexane-2,5-dihydroperoxide, $\alpha,\alpha$-bis(t-butylperoxy)-p-diisopropylbenzene, t-butyl peroxybenzene, and t-butyl peroxymaleic acid.

Among them, 2,5-dimethyl-2,5-di(t-butylperoxy)hexane, 2,4-dichlorobenzoyl peroxide, dicumyl peroxide, benzoyl peroxide, and $\alpha,\alpha'$-bis(t-butylperoxy-m-isopropyl)benzene are preferable, and 2,5-dimethyl-2,5-di(t-butylperoxy) hexane is more preferable.
When the present composition includes the crosslinking agent (C), the content of the crosslinking agent (C) in the present composition is preferably 0.2 to 4 parts by mass, and more preferably 0.2 to 2.5 parts by mass based on 100 parts by mass of the elastomer (A) from the viewpoints that, for example, the crosslinking reaction sufficiently proceeds, and a sealing material excellent in hardness, tensile strength, elongation at break, and 100% Mo in a well-balanced manner can be easily obtained.

<Crosslinking co-agent (D)>

In the present composition, the crosslinking agent (C) may be used singly, but in the case of using the crosslinking agent (C), it is preferable to use the crosslinking co-agent (D). As the crosslinking co-agent (D), a known crosslinking co-agent may be selected according to the kind of crosslinking agent (C).
When the crosslinking co-agent (D) is used, one kind or two or more kinds of the crosslinking co-agent (D) may be used in the present composition.
Examples of the crosslinking co-agent to be used in the case of using a peroxide crosslinking agent include compounds capable of co-crosslinking by a radical (polyfunctional monomers) such as triallyl isocyanurate; triallyl cyanurate; trimethallyl isocyanurate; triallyl formal; triallyl trimellitate; N,N'-m-phenylenebismaleimide; dipropargyl terephthalate; diallyl phthalate; tetraallyl terephthalamide; and polyfunctional (meth)acrylates, for example, ethylene glycol di(meth)acrylate and trimethylolpropane tri(meth)acrylate: metal salts of higher carboxylic acids: polyhydric alcohol (meth)acrylates: and metal salts of (meth)acrylic acid.
Among them, triallyl isocyanurate is preferable from the viewpoints of, for example, excellent reactivity and being capable of easily obtaining a sealing material having excellent heat resistance, high hardness, and high modulus.
When the present composition includes the crosslinking co-agent (D), the content of the crosslinking co-agent (D) in the present composition is preferably 1 part by mass or more, more preferably 2 parts by mass or more, still more preferably 4 parts by mass or more, and preferably 10 parts by mass or less, more preferably 8 parts by mass or less, still more preferably 7 parts by mass or less, particularly preferably 6 parts by mass or less based on 100 parts by mass of the elastomer (A), from the viewpoints that, for example, the crosslinking reaction sufficiently proceeds, and a sealing material excellent in hardness, tensile strength, elongation at break, and 100% Mo in a well-balanced manner can be easily obtained.
In particular, in order to suppress cracks that may be generated in the sealing material, for example, in a plasma atmosphere, a radiation-crosslinked sealing material (radiation-treated product) is preferable. In this case, the content of the crosslinking co-agent (D) in the present composition is preferably 2 parts by mass or more, more preferably 4 parts by mass or more, and preferably 10 parts by mass or less, more preferably 8 parts by mass or less based on 100 parts by mass of the elastomer (A) from the viewpoint that, for example, a sealing material having higher hardness and higher modulus can be easily obtained.
The mass ratio of the content of the crosslinking co-agent (D) to the content of the crosslinking agent (C) in the present composition (the content of the crosslinking co-agent (D)/the content of the crosslinking agent (C)) is preferably 2 or more, more preferably 4 or more, still more preferably 6 or more, and preferably 30 or less, more preferably 20 or less from the viewpoints of, for example, causing the reaction while preventing the crosslinking agent (C) from being excessive or insufficient and being capable of easily obtaining a sealing material exhibiting desired physical properties, particularly from the viewpoint of, for example, being capable of easily obtaining a sealing material having higher hardness and higher modulus.

<Polyol compound>

By using the polyol compound, a sealing material having excellent crack resistance in a plasma environment can be easily formed without impairing the performance as a sealing material.
When the polyol compound is used, one kind or two or more kinds of the polyol compound may be used in the present composition.
As the polyol compound, conventionally known compounds can be widely used, and bisphenols are preferable from the viewpoint that, for example, a sealing material particularly excellent in crack resistance can be easily obtained.
Examples of the bisphenols include 2,2-bis(4-hydroxyphenyl)perfluoropropane (Bisphenol AF), 2,2-bis(4-hydroxyphenyl)propane (Bisphenol A), and bis(4-hydroxyphenyl) sulfone (Bisphenol S), and salts such as alkali metal salts and alkaline earth metal salts of these compounds may also be used. Among them, for example, Bisphenol AF and Bisphenol A are preferable, and Bisphenol AF is more preferable from the viewpoint that, for example, a sealing material particularly excellent in crack resistance can be easily obtained.

When the present composition includes a polyol compound, the content of the polyol compound in the present composition is preferably 0.1 to 3 parts by mass, more preferably 0.1 to 2 parts by mass, and still more preferably 0.1 to 1 part by mass based on 100 parts by mass of the elastomer (A), from the viewpoint of, for example, being capable of easily obtaining a sealing material excellent in crack resistance, having low compression set, and excellent in vulcanization rate.

<Organic pigment>

Suitable examples of the organic pigment include organic pigments which are the same as the organic pigments described in, for example, WO 2004/094527 A.
When the organic pigment is used, one kind or two or more kinds of the organic pigment may be used in the present composition.

<Filler>

The inorganic filler and the organic filler (hereinafter, these are also collectively and simply referred to as a "filler") are particulate (powdery) components other than the compound (B), the crosslinking agent (C), and the crosslinking co-agent (D).
When the filler is used, one kind or two or more kinds of the filler may be used in the present composition.
Examples of the inorganic filler include carbon black, silica, barium sulfate, titanium oxide, and aluminum oxide.
Examples of the organic filler include fluororesins such as PTFE, PFA, FEP, ETFE, and PVDF, polyethylene resins, polyimide resins, silicone resins, and melamine resins.
When the present composition is used for production of such a sealing material in which generation of particles, for example, in a plasma atmosphere is a problem, the content of the filler is preferably 10 parts by mass or less and more preferably 3 parts by mass or less based on 100 parts by mass of the elastomer (A).

<Method for producing present composition>

The present composition can be produced by mixing (kneading) the elastomer (A), the compound (B), and other components described above as necessary, and a production method including the following steps 1 and 2 is preferable.

Step 1: A step of causing a reaction between the compound (b1) and the compound (b2) to synthesize the compound (B)
Step 2: A step of mixing the elastomer (A), the compound (B) obtained in the step 1, and other components described above as necessary

The order of mixing the elastomer (A), the compound (B), and other components described above is not particularly limited. They may be sequentially mixed (kneaded) in any order, or may be mixed (kneaded) all at once, but it is preferable that they are sequentially mixed (kneaded) so that the respective components are uniform.
The step 1 can be performed, for example, under the conditions described in the section for the compound (B).
At the time of the mixing (kneading), a conventionally known mixing (kneading) machine can be used, and examples thereof include an open roll, a Banbury mixer, a biaxial roll, and a kneader.
At the time of the mixing (kneading), the mixing (kneading) may be performed under heating or cooling as necessary depending on a mixing (kneading) machine.

<<Sealing material>>

A sealing material according to an embodiment of the present invention (hereinafter, also referred to as the "present sealing material") is a sealing material obtained from the present composition.
Since the present sealing material is obtained from the present composition, it is excellent in hardness, tensile strength, elongation at break, and 100% Mo in a well-balanced manner, and further excellent in, for example, plasma resistance (radical resistance), crack resistance, and compression set.
The present sealing material can be used as, for example, a gasket or packing of various members, and especially due to the above effects exhibited by the sealing material, it is possible to suitably use the sealing material for a semiconductor manufacturing apparatus or a plasma processing apparatus, and particularly for a drive unit including a gate valve used for an opening of a plasma processing chamber unit.
The present sealing material has, for example, a shape that may be appropriately selected according to the intended use.
The present sealing material can be a sealing material that has the following physical properties despite not

containing the filler.

The Shore A hardness (Type A durometer hardness) of the present sealing material measured according to JIS K 6253:2012 is preferably 40 or more.

The tensile strength of the present sealing material measured according to JIS K 6251:2017 is preferably 4 MPa or more.

The elongation at break of the present sealing material measured according to JIS K 6251:2017 is preferably 200% or more.

The tensile stress at 100% elongation (100% Mo) of the present sealing material measured according to JIS K 6251:2017 is preferably 0.5 MPa or more.

<Method for producing present sealing material>

Specifically, the present sealing material can be produced by molding the present composition, and is preferably a crosslinked product obtained by a method including a step of subjecting the present composition to a crosslinking treatment (crosslinking step), from the viewpoint that, for example, a sealing material more excellent in, for example, plasma resistance (radical resistance), crack resistance, and non-adhesiveness, and excellent in hardness, tensile strength, elongation at break, and 100% Mo in a well-balanced manner can be easily obtained.

When forming the sealing material from the present composition, it is preferable to perform a sheeting step from the viewpoints of, for example, improving the efficiency of the molding operation and reducing the defect rate. This sheeting step is usually performed using, for example, a roll, and is usually also a step of preliminarily molding the present composition into a sheet.

The sheet obtained in the sheeting step is preferably preliminarily molded into a desired sealing material shape before the crosslinking step.

In this preliminary molding, a desired sealing material shape may be directly formed from the sheet obtained in the sheeting step, or the sheet obtained in the sheeting step may be formed into, for example, a rope shape (also synonymous with, for example, a ribbon shape or a noodle shape) by, for example, cutting or extrusion molding, and then the obtained rope-shaped product may be formed into a desired sealing material shape.

The crosslinking step more preferably includes a primary crosslinking step and a secondary crosslinking step.

The crosslinking step is preferably performed using a preliminarily molded product having a desired sealing material shape that is obtained in the preliminary molding.

The primary crosslinking step is preferably a step of heating and pressurizing the preliminarily molded product having a desired sealing material shape that is obtained in the preliminary molding, and specific examples of the step include a step of casting the preliminarily molded product into a mold and crosslinking the preliminarily molded product at a temperature of, for example, 150 to 200°C for, for example, about 5 to 20 minutes under a pressure of about 2 to 15 MPa by, for example, a heat press machine.

The secondary crosslinking step is preferably a step of heating the molded body obtained in the primary crosslinking step, and specific examples thereof include a step of heating the molded body at a temperature of, for example, 150 to 300°C for about 1 to 24 hours, more preferably about 3 to 24 hours using various ovens, preferably a vacuum oven, under normal pressure to reduced pressure.

By this secondary crosslinking step, crosslinking can be promoted, or even if an unreacted component remains after the primary crosslinking step, the unreacted component can be decomposed and volatilized, and a sealing material with less generation of release gas can be obtained.

In the method for producing the present sealing material, a step of irradiation with radiation (step of irradiating with radiation) may be performed after the crosslinking step from the viewpoint of, for example, more easily suppressing a crack that may occur in the sealing material, for example, in a plasma atmosphere. The present sealing material obtained through the step of irradiating with radiation can be considered as a radiation-treated product.

The radiation used for the irradiation in the step of irradiating with radiation is preferably radiation capable of crosslinking the elastomer (A), and examples thereof include an X-ray, a gamma ray, an electron beam, a proton beam, a neutron beam, a heavy particle beam, an alpha ray, and a beta ray, and among these, a gamma ray and an electron beam are preferable.

One kind or two or more kinds of the radiation may be used for the irradiation.

At the time of irradiating with radiation, it is desirable to irradiate with radiation so that the absorbed dose is preferably 1 to 120 kGy and more preferably 20 to 100 kGy. When exposed to such a dose of radiation, unreacted components that can be particles or release gas can be reduced, and a sealing material excellent in, for example, plasma resistance and crack resistance can be easily obtained without excessively reducing the molecular weight of the elastomer (A).

The step of irradiating with radiation may be performed in two or more stages with conditions changed.

At the time of irradiating with radiation, the irradiation may be performed in the air. However, when oxygen is

present at the time of irradiating with radiation, the crosslinking reaction may be inhibited, and there is a possibility that the mechanical strength of the obtained sealing material is reduced or the surface of the obtained sealing material may become sticky. Thus, the step of irradiating with radiation is preferably performed in an atmosphere of an inert gas such as nitrogen or argon.

Examples

An embodiment of the present invention will be described in more detail with reference to Examples, but the present invention is not limited thereto.

[Synthesis Example 1]

A reaction was caused between SIFEL X-71-8114A and SIFEL X-71-8114B (both manufactured by Shin-Etsu Chemical Co., Ltd., both silica-free), that is, a compound with a perfluoro skeleton having an ethylenically unsaturated bond and a reactive organosilicon compound having a hydrosilyl group, at 120°C for 1 hour to synthesize a compound having a perfluoro skeleton (hereinafter, also referred to as a "compound (B1)"). The ratio between SIFEL X-71-8114A and SIFEL X-71-8114B used is 1:1 in mass ratio.

The viscosity of the synthesized compound (B1) at 23°C was measured using a cone-plate viscometer in accordance with the method for measuring a viscosity of a liquid specified in JIS Z 8803:2011. The viscosity of the compound (B1) was 7000 Pa·s.

In the present specification, the values of the viscosity at 23°C measured using a cone-plate viscometer in accordance with the method for measuring a viscosity of a liquid specified in JIS Z 8803:2011 are all values obtained by measuring the viscosity when the torque is stabilized under the conditions of a temperature of 23°C and a rotation speed of 0.05 rpm using CP-52 as a spindle.

[Synthesis Example 2]

A reaction was caused between SIFEL 8070A and SIFEL 8070B (both manufactured by Shin-Etsu Chemical Co., Ltd., both silica-free), that is, a compound with a perfluoro skeleton having an ethylenically unsaturated bond and a reactive organosilicon compound having a hydrosilyl group, at 120°C for 1 hour to synthesize a compound having a perfluoro skeleton (hereinafter, also referred to as a "compound (B2)"). The ratio between SIFEL 8070A and SIFEL 8070B used is 1:1 in mass ratio.

The viscosity of the synthesized compound (B2) at 23°C was measured using a cone-plate viscometer in accordance with the method for measuring a viscosity of a liquid specified in JIS Z 8803:2011. The viscosity of the compound (B2) was 4000 Pa·s.

[Example 1]

70 parts by mass of Tecnoflon P959 (manufactured by Solvay SA, fluorine content: 70% by mass, hereinafter also referred to as a "crosslinkable fluoroelastomer (A-1)") and 30 parts by mass of Tecnoflon P757 (manufactured by Solvay SA, fluorine content: 67% by mass, hereinafter also referred to as a "crosslinkable fluoroelastomer (A-2)") were kneaded at a rotation speed of 20 ppm using a 6-inch roll with the roll temperature set at 60°C. 10 parts by mass of the compound (B1) was added to the mixture, and kneading was performed until the mixture became uniform in appearance. 6 parts by mass of TAIC (triallyl isocyanurate, manufactured by Mitsubishi Chemical Group Corporation) was added to the mixture, and kneading was performed until the mixture became uniform in appearance. Then, 1 part by mass of PERHEXA 25B (manufactured by NOF CORPORATION) was added to the mixture, and kneading was performed until the mixture became uniform in appearance to obtain a bulk elastomer composition.

A molded body (sealing material) was prepared by filling mold with the obtained bulk elastomer composition, subjecting the bulk elastomer composition to press-molding at 170°C for 10 minutes under a pressure of 5 MPa using a compression vacuum press machine (primary crosslinking), and then heating the sheet after the press-molding at 200°C for 16 hours under reduced pressure in a vacuum oven (degree of vacuum: 50 Pa) (secondary crosslinking).

[Examples 2 to 4 and 6 and Comparative Example 1]

Molded bodies (sealing materials) were prepared in the same manner as in Example 1, except that the components shown in Table 1 were used in the amounts (parts by mass) indicated in Table 1.

[Example 5]

A bulk elastomer composition was obtained in the same manner as in Example 2.

A mold was filled with the obtained bulk elastomer composition, the bulk elastomer composition was press-molded at 170°C for 10 minutes under a pressure of 5 MPa using a compression vacuum press machine (primary crosslinking), and then the sheet after the press-molding was heated at 200°C for 16 hours under reduced pressure in a vacuum oven (degree of vacuum: 50 Pa) (secondary crosslinking). The sheet that had been subjected to the secondary crosslinking was then irradiated with radiation so that the absorbed dose was 40 kGy, thereby preparing a molded body (sealing material).

[Comparative Example 2]

70 parts by mass of the crosslinkable fluoroelastomer (A-1) and 30 parts by mass of the crosslinkable fluoroelastomer (A-2) were kneaded at a rotation speed of 20 ppm using a 6-inch roll with the roll temperature set at 60°C. 10 parts by mass of SIFEL X-71-8114A (manufactured by Shin-Etsu Chemical Co., Ltd., silica-free, viscosity at 23°C measured using a cone-plate viscometer in accordance with the method for measuring a viscosity of a liquid specified in JIS Z 8803:2011: 2 Pa·s) and 10 parts by mass of SIFEL X-71-8114B (manufactured by Shin-Etsu Chemical Co., Ltd., silica-free, viscosity at 23°C measured using a cone-plate viscometer in accordance with the method for measuring a viscosity of a liquid specified in JIS Z 8803:2011: 3 Pa·s) were added to the mixture, and kneading was performed until the mixture became uniform in appearance. 6 parts by mass of TAIC (triallyl isocyanurate, manufactured by Mitsubishi Chemical Group Corporation) was added to the mixture, and then 1 part by mass of PERHEXA 25B (manufactured by NOF CORPORATION) was added thereto. However, the added components were not uniformly mixed, and a bulk elastomer composition could not be obtained.

[Comparative Example 3]

70 parts by mass of the crosslinkable fluoroelastomer (A-1) and 30 parts by mass of the crosslinkable fluoroelastomer (A-2) were kneaded at a rotation speed of 20 ppm using a 6-inch roll with the roll temperature set at 60°C. 10 parts by mass of SIFEL 8070A (manufactured by Shin-Etsu Chemical Co., Ltd., silica-free, viscosity at 23°C measured using a cone-plate viscometer in accordance with the method for measuring a viscosity of a liquid specified in JIS Z 8803:2011: 2 Pa·s) and 10 parts by mass of SIFEL 8070B (manufactured by Shin-Etsu Chemical Co., Ltd., silica-free, viscosity at 23°C measured using a cone-plate viscometer in accordance with the method for measuring a viscosity of a liquid specified in JIS Z 8803:2011: 3 Pa·s) were added to the mixture, and kneading was performed until the mixture became uniform in appearance. 6 parts by mass of TAIC (triallyl isocyanurate, manufactured by Mitsubishi Chemical Group Corporation) was added to the mixture, and then 1 part by mass of PERHEXA 25B (manufactured by NOF CORPORATION) was added thereto. However, the added components were not uniformly mixed, and a bulk elastomer composition could not be obtained.

<Hardness, tensile strength, elongation at break, and tensile stress at 100% elongation>

Using the molded bodies obtained in Examples 1 to 6 and Comparative Example 1, hardness (Shore A hardness) was measured in accordance with JIS K 6253:2012, and tensile strength, elongation at break, and tensile stress at 100% elongation (100%Mo) were measured in accordance with JIS K 6251:2017. The results are shown in Table 1.

<Adhesive force>

O-rings (molded bodies) were prepared in the same manner as in Examples 1 to 6 and Comparative Example 1, except that a mold capable of molding an O-ring of size AS-214 was used as the mold in Examples 1 to 6 and Comparative Example 1. The prepared O-ring was mounted on a flange as shown in Fig. 1, and the flange was tightened with a bolt to a metal-touched state and then heated in an electric furnace at a test temperature of 150°C for 72 hours. After the lapse of 72 hours, the flange was quickly taken out from the electric furnace and allowed to cool to room temperature (25°C). Then, a value obtained by subtracting the force due to the weight of the flange from the maximum value of the force when the flange from which the bolt was removed was peeled off at a speed of 300 mm/min was considered as an adhesive force.

When the value of the adhesive force is small, the O-ring (molded body) is less likely to adhere to a mating member that contacts the molded body, even when the O-ring is continuously used for a long period of time at a high temperature in, for example, a semiconductor manufacturing process, which is preferable.

<Plasma resistance>

The obtained molded body was measured for the plasma resistance (mass reduction ratio). Specifically, measurement was performed as follows. The results are shown in Table 1.

Using a flat plate plasma processing apparatus having an electrode diameter of φ 300 mm and an inter-electrode distance of 50 mm, the obtained molded body was irradiated with plasma for 3 hours under the conditions of an RF 1000 W, a $CF_4$ gas flow rate of 10 sccm, an $O_2$ gas flow rate of 190 sccm, and a degree of vacuum of 1 torr. The obtained molded body was placed at a position 6 cm away from the plasma electrode.

Next, the masses of the molded body before and after the test were measured, and the mass reduction ratio (%) was determined by the following formula to evaluate the plasma resistance. It can be said that the smaller the mass reduction ratio is, the better the plasma resistance is.

Mass reduction ratio (%) = {(mass of molded body before test - mass of molded body after test)/mass of molded body before test} × 100

<Processability>

In the above Examples and Comparative Examples, the state at the time of obtaining the bulk elastomer composition was evaluated according to the following criteria.

O: The added components can be uniformly mixed in a short time with the 6-inch roll, and the processability is excellent
Δ: The added components can be uniformly mixed with the 6-inch roll, but when the elastomer composition slides against the 6-inch roll, the elastomer composition easily slips from the 6-inch roll, and it takes time to obtain a uniform elastomer composition
X: The components added to the 6-inch roll were not uniformly mixed, and a uniform elastomer composition cannot be obtained.

<Processing time>

The total time taken from the start of the mastication of the crosslinkable fluoroelastomer by the 6-inch roll to the stabilization of the current value after the addition of PERHEXA 25B was considered as the processing time.

In general, in the case of performing kneading, the current value is stabilized when the added components are uniformly kneaded. Thus, it is possible to determine that a uniform composition has been obtained when the current value is stabilized, which is used as the indication of the completion of the kneading.

[Table 1]

| | Example 1 | Example 2 | Example 3 | Example 4 | Example 5 | Example 6 |
|---|---|---|---|---|---|---|
| Crosslinkable fluoroelastomer (A-1) | 70 | 70 | 70 | 70 | 70 | 100 |
| Crosslinkable fluoroelastomer (A-2) | 30 | 30 | 30 | 30 | 30 | |
| Compound (B1) | 10 | 20 | 30 | | 20 | 20 |
| Compound (B2) | | | | 20 | | |
| SIFEL X-71-8114A | | | | | | |
| SIFEL X-71-8114B | | | | | | |
| SIFEL 8070A | | | | | | |
| SIFEL 8070B | | | | | | |
| TAIC | 6 | 6 | 6 | 6 | 6 | 6 |
| PERHEXA 25B | 1 | 1 | 1 | 1 | 1 | 1 |
| Total | 117 | 127 | 137 | 127 | 127 | 127 |
| Irradiation with radiation | No | No | No | No | Yes | No |
| Hardness (Shore A) | 45 | 48 | 53 | 50 | 53 | 48 |
| Tensile strength (MPa) | 17.3 | 14.9 | 5.1 | 9.6 | 6.7 | 15.0 |

(continued)

| | Example 1 | Example 2 | Example 3 | Example 4 | Example 5 | Example 6 |
|---|---|---|---|---|---|---|
| Elongation at break (%) | 330 | 350 | 275 | 285 | 235 | 330 |
| 100%Mo (MPa) | 1.2 | 1.0 | 0.8 | 1.1 | 1.5 | 1.0 |
| Adhesive force (N) | 37 | 34 | 32 | 39 | 31 | 35 |
| Mass reduction ratio (%) | 3.9 | 3.3 | 3.0 | 3.1 | 3.4 | 3.0 |
| Processability | ○ | ○ | ○ | ○ | ○ | ○ |
| Processing time (min) | 50 | 45 | 60 | 50 | 45 | 60 |

Table 1 (continued)

| | Comparative Example 1 | Comparative Example 2 | Comparative Example 3 |
|---|---|---|---|
| Crosslinkable fluoroelastomer (A-1) | 70 | 70 | 70 |
| Crosslinkable fluoroelastomer (A-2) | 30 | 30 | 30 |
| Compound (B1) | | | |
| Compound (B2) | | | |
| SIFEL X-71-8114A | | 10 | |
| SIFEL X-71-8114B | | 10 | |
| SIFEL 8070A | | | 10 |
| SIFEL 8070B | | | 10 |
| TAIC | 6 | 6 | 6 |
| PERHEXA 25B | 1 | 1 | 1 |
| Total | 107 | 127 | 127 |
| Irradiation with radiation | No | No | No |
| Hardness (Shore A) | 58 | | |
| Tensile strength (MPa) | 11.0 | | |
| Elongation at break (%) | 290 | | |
| 100%Mo (MPa) | 1.3 | | |
| Adhesive force (N) | 52 | | |
| Mass reduction ratio (%) | 8.7 | | |
| Processability | Δ | X | X |
| Processing time (min) | 80 | | |

## Claims

**1.** An elastomer composition comprising:

a crosslinkable fluoroelastomer (A); and
a compound (B) having a perfluoro skeleton, the compound having a viscosity of 1000 to 9000 Pa·s at 23°C, which is measured using a cone-plate viscometer in accordance with the method for measuring a viscosity of a liquid specified in JIS Z 8803:2011.

**2.** The elastomer composition according to claim 1, wherein the content of the compound (B) having a perfluoro skeleton is 5 parts by mass or more based on 100 parts by mass of the crosslinkable fluoroelastomer (A).

**3.** The elastomer composition according to claim 1, wherein the compound (B) having a perfluoro skeleton is a product of a reaction between a compound with a perfluoro skeleton having an ethylenically unsaturated bond and a reactive organosilicon compound having a hydrosilyl group.

**4.** A method for producing an elastomer composition, the method comprising the following steps 1 and 2:

step 1: a step of causing a reaction between a compound with a perfluoro skeleton having an ethylenically unsaturated bond and a reactive organosilicon compound having a hydrosilyl group to synthesize a compound (B) having a perfluoro skeleton, the compound having a viscosity of 1000 to 9000 Pa·s at 23°C, which is measured using a cone-plate viscometer in accordance with the method for measuring a viscosity of a liquid specified in JIS Z 8803:2011; and
step 2: a step of mixing a crosslinkable fluoroelastomer (A) with the compound (B) having a perfluoro skeleton obtained in the step 1.

**5.** The method for producing an elastomer composition according to claim 4, wherein the amount of the compound (B) having a perfluoro skeleton used in the step 2 is 5 parts by mass or more based on 100 parts by mass of the crosslinkable fluoroelastomer (A).

**6.** A sealing material obtained from the elastomer composition according to any one of claims 1 to 3.

**7.** A method for producing a sealing material, the method comprising:
a step of crosslinking the elastomer composition according to any one of claims 1 to 3.

[Fig. 1]

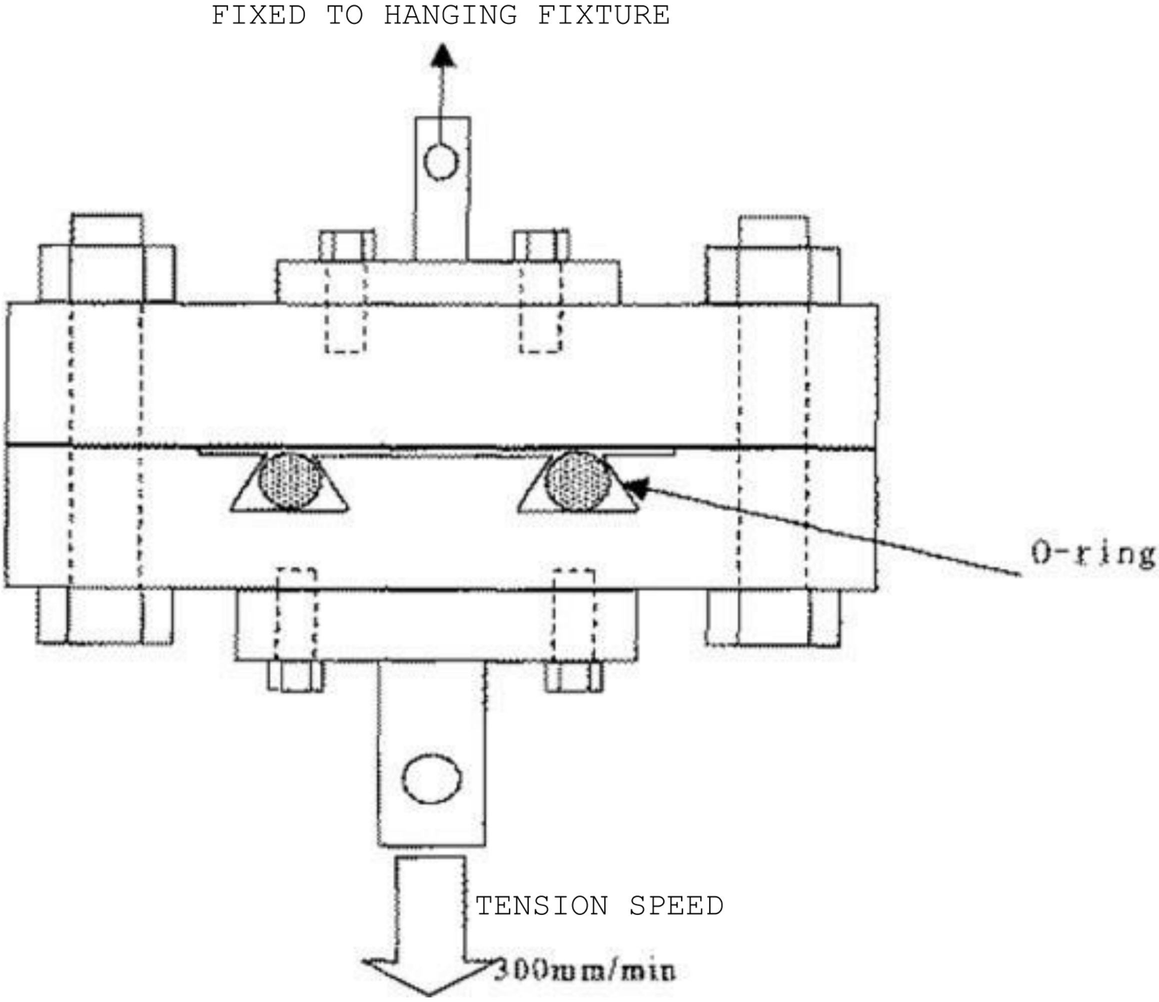

**INTERNATIONAL SEARCH REPORT**

International application No. **PCT/JP2024/004774**

**A. CLASSIFICATION OF SUBJECT MATTER**

***C08L 27/12***(2006.01)i; ***C08L 83/10***(2006.01)i; ***C09K 3/10***(2006.01)i
FI: C08L27/12; C08L83/10; C09K3/10 M

According to International Patent Classification (IPC) or to both national classification and IPC

**B. FIELDS SEARCHED**

Minimum documentation searched (classification system followed by classification symbols)

C08L1/00-101/14; C08K3/00-13/08; C09K3/10-3/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2006-036884 A (NIPPON VALQUA IND LTD.) 09 February 2006 (2006-02-09) claims, examples 1, 2 | 1-7 |
| A | WO 2022/065053 A1 (VALQUA, LTD.) 31 March 2022 (2022-03-31) claims, examples 1-11 | 1-7 |
| A | WO 2022/065054 A1 (VALQUA, LTD.) 31 March 2022 (2022-03-31) claims, examples 1-22 | 1-7 |
| A | WO 2022/065057 A1 (VALQUA, LTD.) 31 March 2022 (2022-03-31) claims, examples 1-15, comparative examples 1-5 | 1-7 |
| A | WO 2021/230231 A1 (NICHIAS CORP.) 18 November 2021 (2021-11-18) claims, example 6 | 1-7 |
| A | JP 2022-097403 A (MITSUBISHI CABLE IND LTD.) 30 June 2022 (2022-06-30) claims, paragraph [0013], examples 1-13 | 1-7 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/004774**

**C. DOCUMENTS CONSIDERED TO BE RELEVANT**

| Category* | Citation of document, with indication, where appropriate, of the relevant passages | Relevant to claim No. |
|---|---|---|
| A | JP 2000-044931 A (NOK CORP.) 15 February 2000 (2000-02-15) claims, examples 1-4 | 1-7 |

Form PCT/ISA/210 (second sheet) (July 2022)

**INTERNATIONAL SEARCH REPORT**
**Information on patent family members**

International application No.
**PCT/JP2024/004774**

| Patent document cited in search report | Publication date (day/month/year) | Patent family member(s) | Publication date (day/month/year) |
|---|---|---|---|
| JP 2006-036884 A | 09 February 2006 | (Family: none) | |
| WO 2022/065053 A1 | 31 March 2022 | US 2023/0365800 A1<br>claims, examples 1-11<br>EP 4219611 A1<br>CN 116323788 A<br>KR 10-2023-0078693 A | |
| WO 2022/065054 A1 | 31 March 2022 | US 2023/0365801 A1<br>claims, examples 1-22<br>EP 4219612 A1<br>CN 116234868 A<br>KR 10-2023-0079086 A | |
| WO 2022/065057 A1 | 31 March 2022 | US 2023/0365802 A1<br>claims, examples 1-15, comparative examples 1-5<br>EP 4219614 A1<br>CN 116323787 A<br>KR 10-2023-0078696 A | |
| WO 2021/230231 A1 | 18 November 2021 | US 2023/0174764 A1<br>claims, example 6<br>EP 4151676 A1<br>CN 115605540 A<br>KR 10-2023-0010703 A | |
| JP 2022-097403 A | 30 June 2022 | EP 4249550 A1<br>claims, paragraph [0012], examples 1-13<br>WO 2022/130713 A1<br>WO 2022/131051 A1<br>CN 116568742 A<br>KR 10-2023-0119123 A | |
| JP 2000-044931 A | 15 February 2000 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019052226 A
- WO 2009119409 A
- JP 2002097329 A
- JP 2008056739 A
- JP 2003183402 A
- JP H11116684 A
- JP 11116684 A
- JP 11116685 A
- JP 2015067737 A
- WO 2004094527 A